# EUROPEAN PATENT APPLICATION

(11) **EP 1 906 091 A2**
(43) Date of publication of application: **02.04.2008**
(21) Application number: 07253777.2
(22) Date of filing: 24.09.2007
(51) Int. Cl.: F23K 5/06, F02C 7/228

(54) **Flow divider valve**

(30) Priority: 26.09.2006 US 527431
(71) Applicant: United Technologies Corporation, Hartford, CT 06101 (US)
(72) Inventor: Cohen, Jeffrey M., Hebron, CT 06248 (US); Hoke, James B., Telland, CT 06084 (US); Kozola, Stuart L., Manchester, CT 06040 (US)
(74) Representative: Leckey, David Herbert

(57) **Abstract**

A flow divider valve (12) for dividing fuel from a single input stream into multiple output streams comprises a valve body (30) and a piston (34) disposed within the valve body (30). The valve body (30) includes a fuel inlet (78), a plurality of fuel outlets (60), and a slot (62) associated with each of the outlets (60). The piston (34) includes an annular groove (74) for connecting the fuel inlet (78) with the slots (62) so that flow of fuel to each fuel outlet (60) is a function of position of the piston (34) and geometric area profile of the slot (62) associated with that fuel outlet (60).

## Description

### BACKGROUND OF THE INVENTION

The present invention relates generally to a fuel system for a gas turbine engine. More particularly, the present invention relates to a flow divider valve configured to control a temperature distribution of a combustor.

Thermoacoustic instabilities arise in gas turbine and aero-engines when acoustic modes couple with unsteady heat released due to combustion in a positive feedback loop. These instabilities can lead to large pressure oscillations inside the combustor cavity, thereby affecting its stable operation and potentially causing structural damage to the combustor components. Two particular examples of thermoacoustic instabilities in annular combustors are the "screech" instability in the afterburner and the "howl" instability in the primary combustion chamber.

Prior art approaches for control of thermoacoustic instabilities typically utilized passive liners or tuned resonators configured to damp the acoustic mode. However, these solutions suffer from several disadvantages. In particular, they introduce additional weight and may be expensive to implement. In addition, resonators are effective only over a limited range of frequencies and become ineffective if frequency of the instability changes because of, for example, changes in operating conditions. These passive devices have to be cooled, which may detrimentally affect the efficiency of the engine. Finally, effective tuned resonator design requires a prior knowledge of the frequency of instability.

Active combustion control has also been considered as an approach for control of thermoacoustic instabilities. Active approaches usually require an accurate mathematical model of the thermoacoustic dynamics for control design. However, on account of complex combustion physics, the exact physical mechanism underlying the initiation and sustenance of instabilities such as screech is not typically understood. Furthermore, there are implementation issues such as lack of suitable bandwith fuel valves that are needed for active control.

The thermoacoustic instabilities typically appear only during a small portion of an aero-engine's flight envelope or operating conditions in the case of land-based combustors. Thus, passive dampers and active control systems are useful to help control thermoacoustic oscillations only over a small portion of operating conditions and have no useful function at nominal operating conditions. Furthermore, they negatively affect weight and performance of the engine at the operating conditions where the instability is not present.

Thus, there is a need for an engine component capable of controlling combustor conditions, such as a temperature distribution within the combustor, to help reduce problems resulting from thermoacoustic instabilities in the combustor.

### BRIEF SUMMARY OF THE INVENTION

The present invention in one aspect provides a flow divider valve for dividing fuel from a single input stream into multiple output streams comprising a valve body and a piston disposed within the valve body. The valve body includes a fuel inlet, a plurality of fuel outlets, and a slot associated with each of the outlets. The piston includes an annular groove for connecting the fuel inlet with the slots so that flow of fuel to each fuel outlet is a function of position of the piston and geometric area profile of the slot associated with that fuel outlet.

### BRIEF DESCRIPTION OF THE DRAWINGS

FIG. 1 is a front view of a fuel manifold assembly.
FIG. 2 is an exploded perspective view of a flow divider valve according to the present invention.
FIG. 3 is a cross-sectional assembled view of the flow divider valve of FIG. 2.
FIGS. 4A - 4D exemplify how the flow divider valve of FIG. 2 may be used to control fuel flowing to a plurality of fuel zones in the fuel manifold assembly.
FIG. 5A illustrates one embodiment of an elongated slot configuration according to the present invention.
FIG. 5B illustrates another embodiment of an elongated slot configuration according to the present invention.
FIG. 5C illustrates another embodiment of an elongated slot configuration according to the present invention.
FIG. 6 is a graph of elongated slot flow versus total input flow for a flow divider valve having six elongated slots.

### DETAILED DESCRIPTION

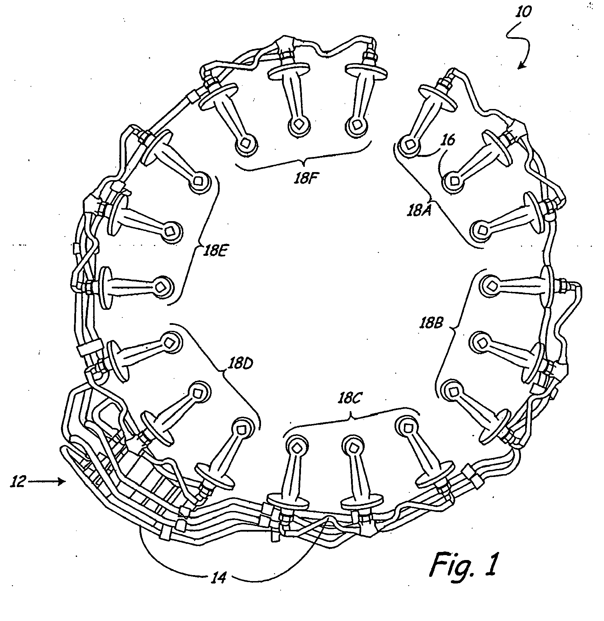

FIG. 1 is a front view of fuel manifold assembly 10, which includes flow divider valve 12, a plurality of fuel lines 14, and a plurality of fuel nozzles 16. As shown in FIG. 1, fuel nozzles 16 are separated into groups and form first fuel zone 18A, second fuel zone 18B, third fuel zone 18C, fourth fuel zone 18D, fifth fuel zone 18E, and sixth fuel zone 18F.

Flow divider valve 12 is configured to divide a single stream of fuel from a fuel source (not shown) into a plurality of fuel streams equal to the number of fuel zones, which would equal six in the embodiment shown. Each of fuel zones 18A - 18F is fed by one of fuel lines 14, where a manifold dedicated to each fuel zone further apportions the fuel flow between each fuel nozzle 16 in the fuel zone.

As will be discussed in further detail below, flow divider 12 is configured to provide a desired combustor temperature distribution by controlling the amount of fuel distributed to each fuel zone at any given point in time. By controlling the amount of fuel distributed to each fuel zone, flow divider valve 12 may help alleviate, among other things, combustion instabilities caused by the interaction between the acoustics of the combustion chamber and the combustion process itself. Combustion instabilities are commonly referred to as "tonal noise." Not only is tonal noise objectionable to those individuals in and around an aircraft, but vibrations resulting from the tonal noise may also cause damage to portions of the aircraft, including engine components.

It is important to note that although the embodiment in FIG. 1 depicts fuel manifold assembly 10 having six fuel zones, the flow divider valve of the present invention is useful in conjunction with any manifold assembly having two or more fuel zones. In addition, although fuel zones 18A - 18F are shown as having three fuel nozzles 16 per zone, fuel zones having any number of fuel nozzles 16 are within the intended scope of the present invention.

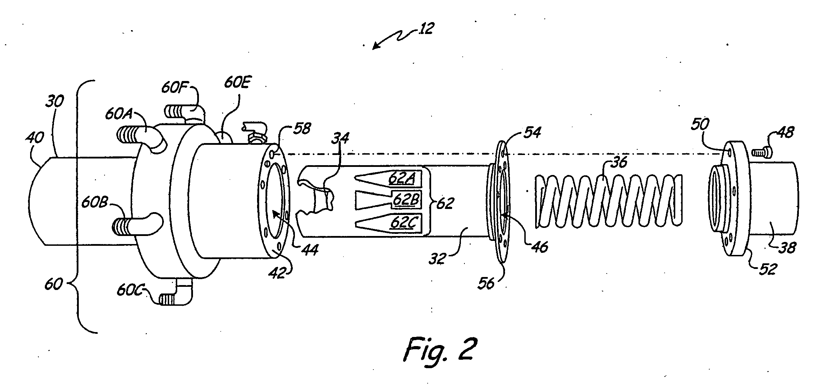

FIG. 2 is an exploded perspective view of flow divider valve 12 having outer cylindrical casing 30, sleeve 32, piston 34, spring 36, and cap member 38. Cylindrical casing 30 includes closed end 40, open end 42, and aperture 44. Aperture 44 of cylindrical casing 30 is configured to receive sleeve 32, which includes bore 46 configured to receive piston 34 and spring 36.

Cap member 38 is configured to be secured to outer cylindrical casing 30 by a plurality of screws 48 (only one shown). As shown in FIG. 2, screws 48 are insertable through a plurality of openings 50 in flange portion 52 of cap member 38 and a corresponding plurality of openings 54 in flange portion 56 of sleeve 32, and threaded into a plurality of complementary holes 58 in outer cylindrical casing 30.

Cylindrical casing 30 further includes a plurality of discharge fittings 60 disposed along an outer circumference. As will be discussed in further detail below, discharge fittings 60 function with a plurality of elongated slots 62 formed in sleeve 32 to divide fuel into multiple streams. In the embodiment shown in FIG. 2, it is presumed that there are six elongated slots 62A - 62F and six discharge fittings 60A - 60F (although not all are visible), and that each of discharge fittings 60 is configured to distribute fuel to one of the fuel zones. For example, it is presumed that discharge fitting 60A and elongated slot 62A are dedicated to servicing fuel zone 18A. Each of discharge fittings 60 is connected to one of fuel lines 14, which transport fuel to their corresponding fuel zone within fuel manifold assembly 10. As stated above, a manifold apportions the fuel flowing from a discharge fitting 60 through a fuel line 14 between each fuel nozzle 16 in the fuel zone. In one common embodiment, the manifold apportions the fuel equally between each fuel nozzle 16. However, manifolds that do not apportion fuel equally between each fuel nozzle 16 are also contemplated.

Although elongated slots 62 are shown formed in sleeve 32, embodiments that do not include a sleeve having elongated slots are also contemplated. For instance, elongated slots 62 may be formed in, for example, cylindrical casing 30 instead of sleeve 32 without departing from the intended scope of the present invention.

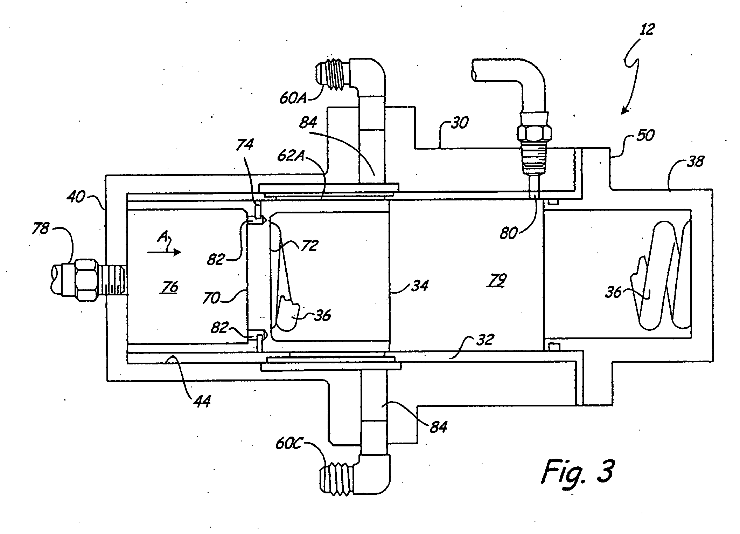

FIG. 3 is a cross-sectional assembled view of flow divider valve 12. As shown in FIG. 3, sleeve 32 is disposed within bore 44 of cylindrical casing 30 and is locked into position on one end by flange 50 of cap member 38 and on another end by closed end 40 of cylindrical casing 30. Piston 34 is disposed within and slidable with respect to fixed sleeve 32.

Piston 34 includes first fluid reaction wall 70, second fluid reaction wall 72, and annular groove 74. Fuel flows into fuel chamber 76 within cylindrical casing 30 through fuel inlet port 78. The fuel within chamber 76 acts as a force on first fluid reaction wall 70, thereby pushing piston 34 toward the right, as indicated by arrow A. An opposing force acts on second fluid reaction wall 72 to counteract the force caused by the fuel within chamber 76. In particular, this opposing force acting on second fluid reaction wall 72 is created by spring 36 and a constant backside reference pressure within chamber 79 admitted through inlet port 80. Although the backside reference pressure is not a necessary component of the present invention, having a constant reference pressure opposing the force caused by fuel flow into chamber 76 may help provide control to flow divider valve 12 so that piston 34 always moves approximately the same distance relative to sleeve 32 for a given fuel pressure flow. Thus, the backside reference pressure admitted into chamber 79 through inlet port 80 helps to provide consistent performance of flow divider valve 12.

Annular groove 74 of piston 34 is formed along an outer diameter of piston 34 and is fed with fuel from fuel chamber 76 through a plurality of drilled axial holes 82 (only two shown). In particular, fuel is injected into fuel chamber 76 from the fuel source, where it then passes through axial holes 82 and into annular groove 74. Once within annular groove 74, the fuel is distributed through elongated slots 62 and into discharge ports 84 coupled to discharge fittings 60.

As the volume of fuel admitted into fuel chamber 76 through fuel inlet port 78 increases as metered by a fuel control (not shown), the force acting on first fluid reaction wall 70 overcomes the force acting on second fluid reaction wall 72, and piston 34 moves rightward such that annular groove 74 slides over elongated slots 62. The amount of fuel distributed through each discharge fitting 60 is dependent upon the location of annular groove 74 in relation to each elongated slot 62 and the geometric area profile of each elongated slot 62. Thus, as piston 34 moves further toward the right over elongated slots 62 due to an increase in fuel flow into fuel chamber 76, the area of each slot 62 that is uncovered or placed in communication with annular groove 74 changes, thereby altering the amount of fuel flow distributed through each discharge fitting 60 to a fuel zone. As a result, position of annular groove 74 with respect to elongated slots 62 is a function of input fuel flow.

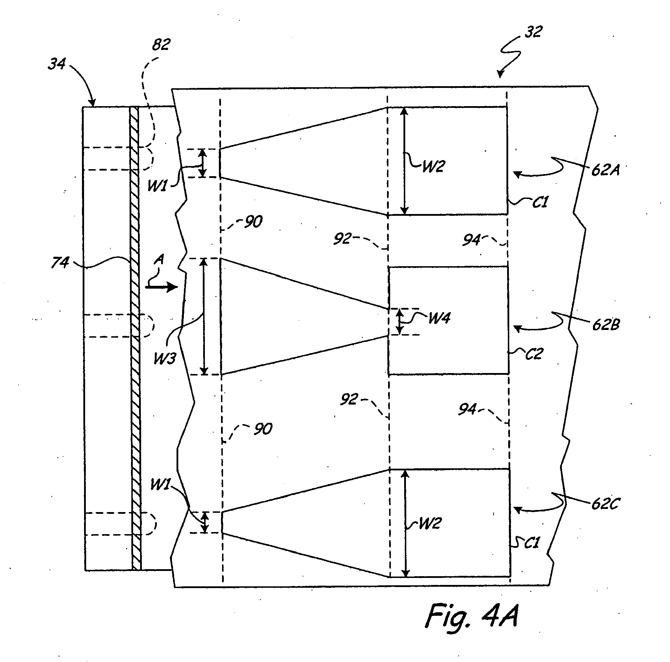

FIGS. 4A - 4D exemplify how flow divider valve 12 may be configured to control the amount of fuel flowing through each discharge fitting 60 for a given flow rate, thereby controlling the temperature distribution within the combustor. In reference to FIGS. 4A - 4D, elongated slot 62A has slot configuration C1, elongated slot 62B has slot configuration C2, and elongated slot 62C also has slot configuration C1. Elongated slot configurations C1 and C2 have geometrically different area profiles designed to provide different amounts of fuel to their respective discharge fittings 60 to vary the temperature distribution within the combustor. As shown in FIGS. 4A - 4D, the geometric areas of elongated slot configurations C1 and C2 between a first edge 90 and a transition point 92 are not the same. In particular, elongated slot configuration C1 has a short width W1 near first edge 90 and a large width W2 near transition point 92. Conversely, elongated slot configuration C2 has a large width W3 near first edge 90 and a small width W4 near transition point 92. Furthermore, as shown in FIGS. 4A - 4D, the geometric areas of elongated slot configurations C1 and C2 between transition point 92 and a second edge 94 are substantially equivalent. As will be illustrated in the following figures, the amount of fuel flow through each elongated slot at a particular axial position of annular groove 74 is a function of slot width at that position.

FIG. 4A illustrates annular groove 74 in a first position along an axial length of elongated slots 62A, 62B, and 62C. As shown in FIG. 4A, piston 34 has not yet moved a sufficient distance so as to align annular groove 74 with any portion of the slots. Therefore, in this first position, no fuel is distributed to any of discharge fittings 60 through the slots. However, once flow rate into fuel chamber 76 is increased above some minimum amount, piston 34 (and annular groove 74) will move axially toward the right (as indicated by arrow A) to allow fuel to flow through slots 62A, 62B, and 62C and into their corresponding discharge fittings 60A, 60B, and 60C.

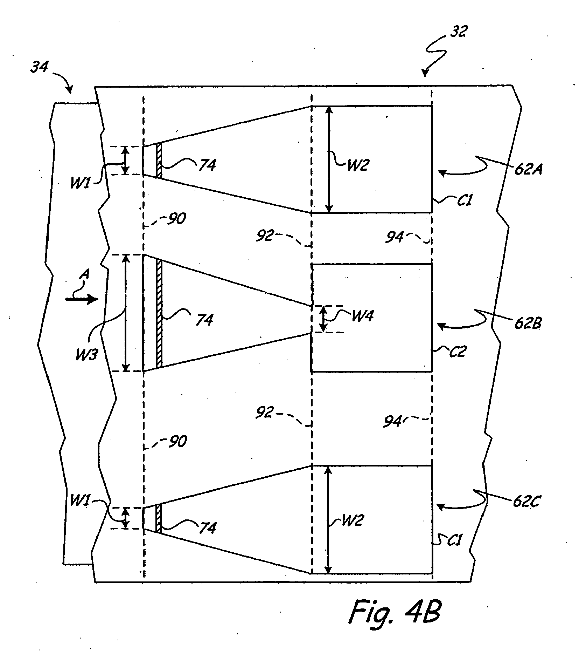

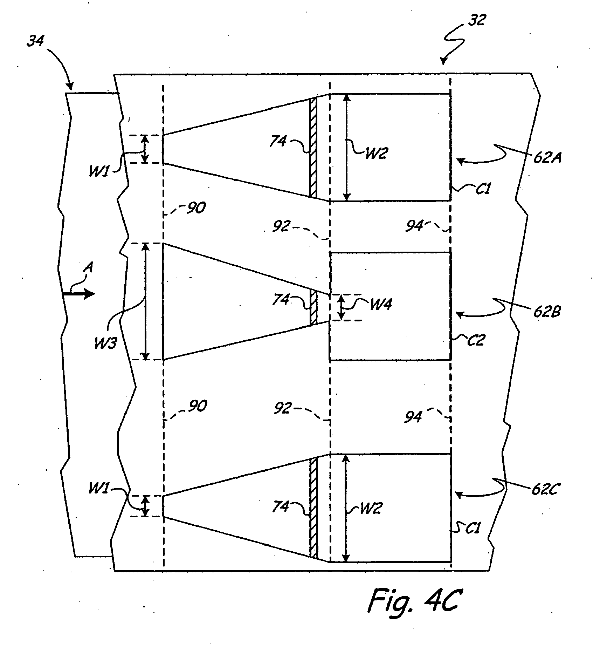

FIG. 4B illustrates annular groove 74 in a second position along the axial length of elongated slots 62A, 62B, and 62C. As shown in FIG. 4B, piston 34 and annular groove 74 have been pushed toward the right due to an increase of fluid flow into fuel chamber 76. This is illustrated in FIG. 4B by the hatched area of annular groove 74 visible through the slots. In particular, the hatched area represents a variable flow passage defined by alignment of annular groove 74 with each of the slots 62. The amount of fuel flow to each discharge fitting 60 through its corresponding elongated slot is directly related to the size of the variable flow passage visible at that particular piston position. Thus, in reference to elongated slot configurations C1 and C2 shown in FIG. 4B, a small amount of fuel will flow through elongated slots 62A and 62C when annular groove 74 is located near first edge 90. However, a large amount of fuel will flow through elongated slot 62B at the same axial position of annular groove 74.

FIG. 4C illustrates annular groove 74 in a third position along the axial length of elongated slots 62A, 62B, and 62C. As shown in FIG. 4C, piston 34 and annular groove 74 have been pushed further toward the right due to an increase of fluid flow into fuel chamber 76. This is illustrated in FIG. 4C by the hatched area of annular groove 74 visible through the slots. Once again, the amount of fuel flow to each discharge fitting 60 through its corresponding elongated slot is directly related to the size of the variable flow passage visible at that particular piston position. Thus, in reference to elongated slot configurations C1 and C2 shown in FIG. 4C, a small amount of fuel will flow through elongated slot 62B when annular groove 74 is located near transition point 92. However, a large amount of fuel will flow through elongated slots 62A and 62C at the same axial position of annular groove 74.

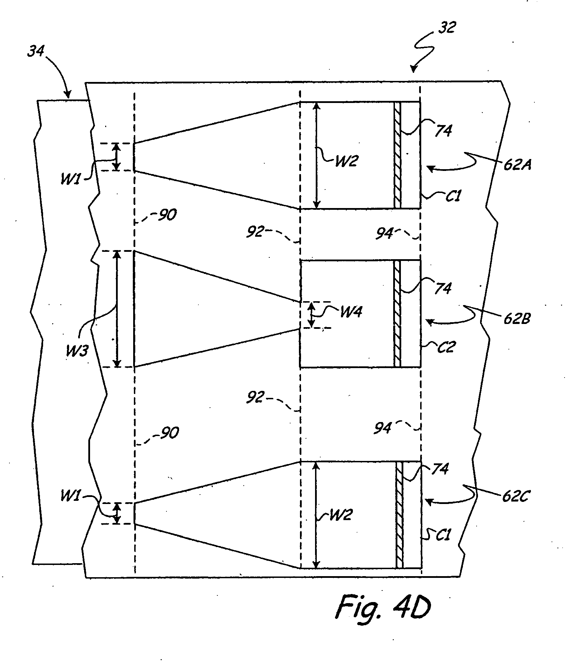

FIG. 4D illustrates annular groove 74 in a fourth position along the axial length of elongated slots 62A, 62B, and 62C where the geometric area profile of each slot is now substantially equivalent. As shown in FIG. 4D, this portion of elongated slot configurations C1 and C2 is located between transition point 92 and second edge 94. When annular groove 74 is aligned with the portion of the slots having similar area profiles, the flow of fuel provided to each discharge fitting 60 will be approximately equivalent, as indicated by the similar visible hatched areas of annular groove 74 shown within elongated slots 62A, 62B, and 62C. In some combustor systems, elongated slots having regions of uniform area profiles are beneficial because a non-uniform combustor temperature distribution may not be desirable at all operating conditions due to the potential impact such a distribution may have on combustor and turbine durability. Thus, at high power operating points, the combustor system may require a uniform temperature distribution in order to prevent damage to the combustor and other associated components.

As shown in FIGS. 4A - 4D, elongated slot configurations C1 and C2 each include a first region bounded by first edge 90 and transition point 92 where the slots have a non-uniform geometric area profile, and a second region bounded by transition point 92 and second edge 94 where the slots have a uniform geometric area profile. However, elongated slot configurations that do not include regions of uniform geometric area profiles are also contemplated and within the intended scope of the present invention.

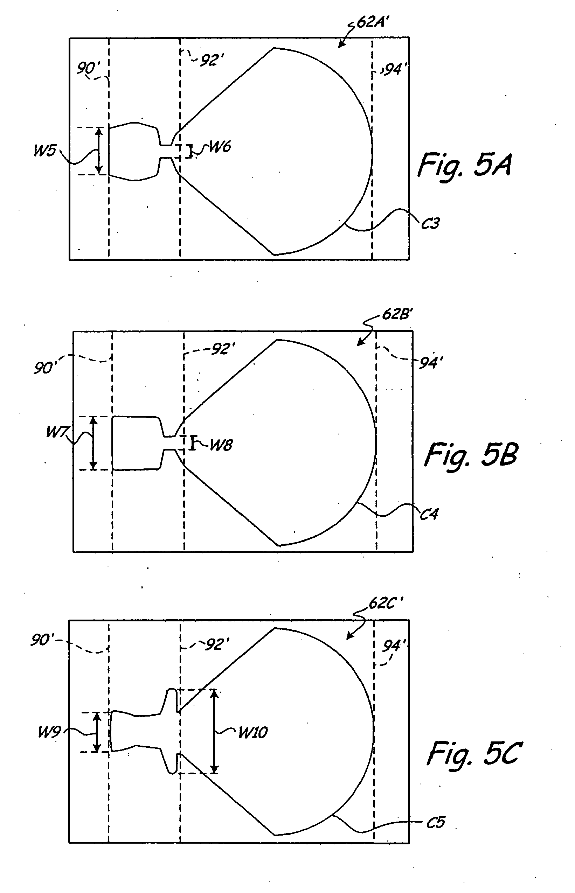

FIGS. 5A, 5B, and 5C illustrate three alternative elongated slots 62A', 62B', and 62C' having elongated slot configurations C3, C4, and C5, respectively. For purposes of example and comparison, the three figures will be described together in the following discussion. It should be understood that the following configurations are shown merely for example and not for limitation.

Elongated slot configurations C3, C4, and C5 have geometrically different area profiles designed to provide different amounts of fuel to different discharge fittings 60 to vary the temperature distribution within the combustor. As shown in FIGS. 5A, 5B, and 5C, the geometric area profiles of elongated slot configurations C3, C4, and C5 between a first edge 90' and a transition point 92' are not the same. In particular, elongated slot configuration C3 has a large width W5 near first edge 90'. Moving rightward toward transition point 92', the width of the slot first increases and then decreases before reaching a narrow neck portion having a width W6 near transition point 92'. Elongated slot configuration C4 is similar to elongated slot configuration C3. However, elongated slot configuration C4 has a large width W7 near first edge 90' that is slightly larger than width W6 of elongated slot configuration C3. Moving rightward toward transition point 92', the width of the slot remains substantially constant before reaching a narrow neck portion having a width W8 near transition point 92'. As shown in FIGS. 5A and 5B, width W6 of elongated slot configuration C3 and width W8 of elongated slot configuration C4 are approximately equal. Finally, elongated slot configuration C5 has a smaller width W9 near first edge 90'. Moving rightward toward transition point 92', the width of the slot decreases slightly, remains constant for a short distance, and then ramps up prior to reaching transition point 92' to a large width W10.

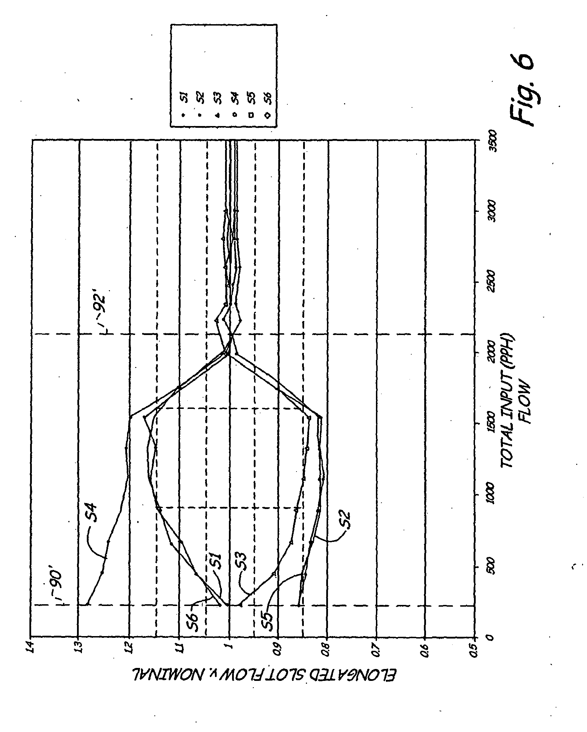

As will be seen in FIG. 6, the various slot widths will determine flow through each slot for a given input flow rate. For example, near transition point 92', elongated slots 62A' and 62B' having slot configurations C3 and C4, respectively, will allow only a small amount of fuel to flow through the respective slots. On the other hand, elongated slot 62C', which has slot configuration C5, will allow a large amount of fuel to flow through the slot. Thus, the amount of fuel flow through the slots is directly related to the widths of the slots at a particular location along the length of the slots.

Similar to elongated slots 62A, 62B, and 62C as discussed above, elongated slots 62A', 62B', and 62C' include a region where the geometric area profile of their respective slot configurations is substantially equivalent. In particular, as shown in FIGS. 5A, 5B, and 5C, this portion of elongated slot configurations C3, C4, and C5 is also located between transition point 92' and a second edge of the slots 94'. When annular groove 74 is aligned with the portion of the slots having similar area profiles, the flow of fuel provided to each discharge fitting 60 will be approximately equivalent. Therefore, as shown in FIGS. 5A, 5B, and 5C, elongated slot configurations C3, C4, and C5 also include a first region bounded by first edge 90' and transition point 92' where the slots have a non-uniform geometric area profile, and a second region bounded by transition point 92' and second edge 94' where the slots have a uniform geometric area profile.

FIG. 6 is a graph of flow through each elongated slot (versus a nominal flow) as a function of the total input flow for one embodiment of a flow divider valve having six elongated slots 62 comprising a combination of elongated slot configurations C3, C4, and C5. As discussed previously, the input flow rate into flow divider valve 12 is directly related to the location of annular groove 74 with respect to each elongated slot. Thus, the graph in FIG. 6 depicts the effect the various geometric area profiles have on the amount of flow capable of reaching the fuel zones.

As shown in FIG. 6, curves S1 and S6 represent slots having geometric area profiles similar to elongated slot configuration C3, curve S4 represents a slot having a geometric area profile similar to elongated slot configuration C4, and curves S2, S3, and S5 represent slots having geometric area profiles similar to elongated slot configuration C5. In FIG. 6, curves S2, S3, and S5 begin near the broken line representing first edge 90' and drop to their lowest points between approximately 1000 and 1500 pounds per hour (PPH) of input flow. Then, between about 1500 and 2100 PPH, curves S2, S3, and S5 ramp back up as a result of the increased width W10. Similarly, curves S1 and S6 begin near the broken line representing first edge 90' and increase to their highest points between approximately 1000 and 1500 PPH of input flow. Then, between about 1500 and 2100 PPH, curves S1 and S6 ramp down as a result of the decreased width W6. Finally, curve S4 begins near the broken line representing first edge 90' and decreases gradually until about 1500 PPH. Between 1500 and 2100 PPH, curve S4 ramps down as a result of the decreased width W8. Above about 2100 PPH, which represents transition point 92', curves S1-S6 appear substantially similar, which means that each of the six slots is allowing a similar amount of flow to reach their corresponding fuel zones. As a result, the combustor temperature distribution in this region will be approximately uniform.

As shown in FIG. 6, the first point of curve S4 near first edge 90' is located at a much higher flow value than the other five curves. This is due to the fact that the geometric area profile of elongate slot configuration C4 is designed to have a high flow rate when annular groove 74 is located near first edge 90' so that its corresponding fuel zone receives more fuel than the other five fuel zones, thereby making it an optimal location for a spark plug.

It is important to note that elongated slot configurations C1 - C5 are only five possible elongated slot configurations that may be used to design elongated slots capable of varying the amount of fuel distributed to various fuel zones. Thus, the geometric area profiles in the above figures are shown merely for purposes of example and not for limitation. In addition, fuel divider valve 12 was described as including six elongated slots for purposes of example and explanation only. In particular, any sleeve having a plurality of elongated slots that include two or more geometrically different slot area profiles is contemplated.

Although the present invention has been described with reference to preferred embodiments, workers skilled in the art will recognize that changes may be made in form and detail without departing from the scope of the invention.

## Claims

1. A flow divider valve (12) for dividing fuel from a single input stream into multiple output streams, the flow divider valve (12) comprising:
a valve body (30) including a fuel inlet (78), a plurality of fuel outlets (60), and a slot (62) associated with each of the outlets (60); and
a piston (34) disposed within the valve body (30), wherein the piston (34) includes an annular groove (74) for connecting the fuel inlet (78) with the slots (62) so that flow of fuel to each fuel outlet (60) is a function of position of the piston (30) and geometric area profile of the slot (62) associated with that fuel outlet (60).

2. The flow divider valve of claim 1, wherein the valve body includes a casing (30) and a sleeve (32) disposed within the casing (30).

3. The flow divider valve of claim 2, wherein the slots (62) are spaced circumferentially around the sleeve (32).

4. The flow divider valve of any preceding claim, wherein each fuel outlet (60) is configured to feed fuel to a fuel zone (18).

5. The flow divider valve of any preceding claim, wherein the fuel inlet (78) is configured to receive a controlled amount of fuel flow from a fuel source.

6. The flow divider valve of claim 5, wherein the piston (34) further comprises:
a first reaction wall (70) subjected to the controlled fuel flow from the fuel source; and
a second reaction wall (72) opposing the first reaction wall (70), wherein the second reaction wall is subjected to a spring force.

7. The flow divider valve of claim 6, wherein the second reaction wall (72) is further subjected to a reference pressure.

8. The flow divider valve of any preceding claim, wherein position of the piston (34) relative to the slots (62) is a function of fuel flow rate into the flow divider valve (12) through the fuel inlet (78).

9. The flow divider valve of any preceding claim, wherein each of the slots (62) includes a first region and a second region, and wherein the second regions of each of the slots have substantially similar geometric area profiles.

10. The flow divider valve of claim 9, wherein the second regions of each of the slots (62) are configured to produce substantially equivalent flows through each of the slots (62) when the annular groove (74) is aligned with the second regions.

11. A flow divider valve (12) for dividing a stream of fuel from a single input stream into multiple output streams, the flow divider valve comprising:
a casing (30);
a sleeve (32) disposed within the casing (30);
a plurality of slots (62) circumferentially spaced around the sleeve (32), at least two slots (62) having different geometric area profiles; and
a piston (34) disposed within and slidable with respect to the sleeve (32), the piston (34) having an annular groove (74) configured to receive fuel from a fuel source and direct the fuel through the slots (62).

12. The flow divider valve of claim 11, wherein each of the slots (62) includes a first region and a second region.

13. The flow divider valve of claim 12, wherein the second regions of the slots (62) have substantially equivalent area profiles.

14. The flow divider valve of claim 11, 12 or 13, wherein each slot (62) is configured to feed fuel to a fuel outlet (60).

15. The flow divider valve of any of claims 11 to 14, wherein position of the annular groove (74) relative to the slots (62) determines fuel flow through each slot.

16. The flow divider valve of claim 15, wherein position of the annular groove (74) relative to the slots (62) is a function of fuel flow rate of the input stream.

17. A method for distributing fuel to a combustor, the method comprising:
providing an input stream of fuel to a flow divider valve (12) having an inlet (78), a piston (34), a plurality of outlets (60), and a slot (62) associated with each of the outlets (60); and
dividing the input stream of fuel with the flow divider valve (12) as a function of position of the piston (34) and geometric area profiles of the slots (62).

18. The method of claim 17, wherein each slot (62) is configured to feed fuel to a fuel zone (18) having at least one fuel injector.

19. The method of claim 17 or 18, wherein each of the slots (62) includes a first region and a second region, and wherein the second regions of each of the slots (62) have substantially similar geometric area profiles.

20. The method of claim 17, 18 or 19, wherein position of the piston (34) is a function of flow rate of the input stream of fuel.
